# EUROPÄISCHE PATENTSCHRIFT

(11) **EP 1 127 756 B1**
(45) Veröffentlichungstag und Bekanntmachung des Hinweises auf die Patenterteilung: **27.04.2005**
(21) Anmeldenummer: 01102165.6
(22) Anmeldetag: 02.02.2001
(51) Int. Cl.: G06F 12/14, G05B 19/042, B60R 25/00

(54) **Autorisierungsverfahren mit Zertifikat**
Authorisation method with certificate
Procédé d'autorisation avec certificat

(30) Priorität: 25.02.2000 DE 10008973
(43) Veröffentlichungstag der Anmeldung: 29.08.2001
(73) Patentinhaber: Bayerische Motoren Werke Aktiengesellschaft, 80809 München (DE)
(72) Erfinder: Schmidt, Ernst, 85737 Ismaning (DE); Kuhls, Burkhart, 81673 München (DE)

(56) Entgegenhaltungen:
- EP-A- 1 128 242
- DE-C- 10 141 737

## Beschreibung

Die Erfindung betrifft ein Verfahren zur Sicherstellung der Datenintegrität einer Software für ein Steuergerät eines Kraftfahrzeugs.

Mit dem zunehmenden Anteil der Elektronik und der Kommunikationsmöglichkeiten im und mit einem Fahrzeug wachsen auch die Anforderungen, welche an die Sicherheit gestellt werden müssen.

In den verschiedensten Bereichen des Fahrzeugs werden Mikrocontroller zur Steuerung eingesetzt. Diese Steuergeräte sind heutzutage oft über ein oder mehrere Bussysteme miteinander verbunden, und es gibt meist Möglichkeiten (z.B. Diagnoseverbindung), von außen auf diesen Bus zuzugreifen und mit den einzelnen Steuergeräten zu kommunizieren.

Die Funktionsweise der Steuergeräte wird durch Softwareprogramme bestimmt. Bisher ist die Software, die in einem Steuergerät (auch: Controller) eingesetzt wird, meist in einem nicht programmierbaren Speicher abgelegt (z.B. bei maskenprogrammierten Mikrocontrollern). Dadurch ist eine Manipulation der Software nicht ohne weiteres zu realisieren. Beispielsweise kann der komplette Austausch eines Speicherbausteins gegen einen anderen Speicherbaustein erkannt und entsprechend darauf reagiert werden.

Durch den zukünftigen Einsatz von programmierbaren, insbesondere sogenannten flashprogrammierbaren Steuergeräten im Fahrzeug wird die Gefahr jedoch größer, daß unbefugte Manipulationen an der Software und somit an der Arbeitsweise der Steuergeräte durchgeführt werden. So könnte der Austausch von Software seitens nicht autorisierter Personen einfach durch Neuprogrammierung mit geringem Aufwand vollzogen werden.

Aus Sicherheitsgründen und zur Erfüllung von gesetzlichen Anforderungen müssen jedoch Maßnahmen ergriffen werden, die entweder eine Veränderung von Originalsoftware verhindern oder eine solche Änderung nur autorisierten Personen zugestehen.

Im übrigen könnte es sich zukünftig als vorteilhaft erweisen, ein Gleichteile-Konzept zu Verfolgen, wobei bei unterschiedlichen Modellen gleiche Hardware verwendet wird. Der Unterschied in der Funktionsweise liegt dann nur noch in einer unterschiedlichen Software. Bei diesem Konzept besteht freilich die Notwendigkeit, daß eine bestimmte Software nur auf einem individuellen Fahrzeug lauffähig ist und nicht einfach kopierbar sein darf.

Aus dem Stand der Technik sind eine Vielzahl von Authentifizierungsverfahren und -vorrichtungen bekannt.

So ist in der US 5,844,986 ein Verfahren beschrieben, welches zur Vermeidung eines nicht erlaubten Eingriffs in ein BIOS-Systems eines PC verwendet wird. Ein kryptographischer Coprozessor, der einen BIOS-Speicher enthält, führt basierend auf einem sogenanten Public-Key-Verfahren mit einem öffentlichen und einem geheimen Schlüssel eine Authentifizierung und Überprüfung einer BIOS-Änderung durch. Dabei erfolgt die Überprüfung durch eine Prüfung einer in der einzuspielenden Software eingebetteten digitalen Signatur.

Aus der EP 0 816 970 ist eine Vorrichtung zur Überprüfung einer Firmensoftware bekannt. Diese Vorrichtung zur Authentifizierung eines Boot-PROM-Speichers umfaßt einen Speicherteil mit einem Mikro-Code. Ein Authentifizierungs-Sektor umfaßt einen Hash-Generator, der Hash-Daten in Antwort auf die Ausführung des Mikro-Codes erzeugt.

Mit den obigen Verfahren oder Vorrichtungen ist jedoch nicht unmittelbar die Überprüfung einer in ein Steuergerät eines Kraftfahrzeuges einzuspielenden Software möglich.

In der EP 0 813 132 ist ein Authentifizierungsverfahren beschrieben, bei dem ein Programm mit einem Zertifikat und einer Zugangsliste gekoppelt ist. Gemäß einer bevorzugten Ausführungsform erstellt eine Zertifikat-Agentur ein Zertifikat für einen Code und ein Zertifikat für die Zugangsliste. Ist das Zertifikat einmal vergeben, ist es nicht mehr möglich, den Code oder die Zugangsliste zu verändern, ohne das Zertifikat zu verletzen. Der Code und die Zugangsliste werden zusammen mit ihren Zertifikaten in einem Server gespeichert. Mit diesem Verfahren kann ein Kunde, der den Code oder die Zugangsliste anfordert, deren Authentität feststellen. Eine Anwendung dieses Verfahrens im Kraftfahrzeugbereich ist jedoch nicht ohne weiteres möglich.

Allgemein wäre es von Vorteil, auf mehrere Berechtigte zur Erstellung und authentischen Kennzeichnung von angeforderter Software zurückgreifen zu können. Damit müßte die Kennzeichnung nicht von einer zentralen Stelle alleine vorgenommen werden. Allerdings sollte weiter eine zentrale Überwachungsstelle zur Berechtigungsvergabe für ausgewählte Berechtigte eingerichtet sein.

Aufgabe der vorliegenden Erfindung ist es, ein Verfahren zur Sicherstellung der Datenintegrität einer Software für ein Steuergerät eines Kraftfahrzeugs zur Verfügung zu stellen, wobei mehrere Berechtigte, die von einer zentralen Einrichtung kontrollierbar sind, eine authentische Software erstellen und entsprechend kennzeichnen können.

Die Aufgabe wird durch die Merkmale im Anspruch 1 gelöst.

Demgemäß kann eine zentrale Einrichtung, nachfolgend als Trust-Center bezeichnet, an Berechtigte ein oder mehrere Zertifikate vergeben, mit dem der oder die damit Ausgestatteten Software für ein Steuergerät selbst ordnungsgemäß signieren und lauffähig in ein Fahrzeug einspielen können.

Zu diesem Zweck stellt beispielsweise das Trust-Center (in einer alternativen Ausführungsform das Fahrzeug selbst) ein Steuergeräte-Schlüsselpaar mit einem ersten und einem zweiten Schlüssel bereit. Der erste Schlüssel wird bei der Produktion eines Fahrzeugs in dem Steuergerät selbst abgelegt oder für das Steuergerät hinterlegt. Aus diesem Grunde wird dieses Schlüsselpaar als Steuergeräte-Schlüsselpaar bezeichnet. Mit dem zweiten Schlüssel des Trust-Centers wird ein erstes Zertifikat für einen Berechtigten, nachfolgend Zertifikatsinhaber, signiert.

Zur besseren Klarheit wird zunächst angenommen, daß nur ein Zertifikat zum lauffähigen Einlesen einer neuen Software in ein Steuergerät benötigt wird. Dieses eine Zertifikat enthält in einem Zertifikationsinformationsteil neben bestimmten Zertifikatsinformationen zumindest einen ersten Schlüssel des Zertifikatsinhabers, der sich selbst ein Zertifikats-Schlüsselpaar mit einem ersten und einem zweiten Schlüssel generiert hat. Als weitere Zertifikationsinformationen können beispielsweise der Zertifikatsaussteller, eine Seriennummer, der Zertifikatsinhaber, bestimmte Zugriffsrechte oder ein Gültigkeitszeitraum festgelegt sein.

Der Berechtigte oder Zertifikatsinhaber signiert dann mit seinem zweiten Schlüssel des Zertifikats-Schlüsselpaares die in das Steuergerät einzuspielende Software. Sowohl das Zertifikat wie auch die von dem Zertifikatsinhaber signierte Software werden dann in das Steuergerät eines Fahrzeugs eingespielt. Das Steuergerät erkennt mittels seines eigenen ersten Schlüssels des Steuergeräte-Schlüsselpaares die Rechtmäßigkeit des Zertifikates und akzeptiert die Zertifikatsinformationen, darunter den darin enthaltenen Schlüssel. Mit diesem Schlüssel, also dem ersten Schlüssel des Zertifikats-Schlüsselpaares, wird wiederum die Überprüfung der Signatur der eingespielten Software vorgenommen. Ist auch diese Signatur als einwandfrei erkannt, so wird sie vom Steuergerät akzeptiert.

Mit dieser Vorgehensweise kann man Änderungs- und Signierrechte allgemein vergeben. Es muß nicht jede Software von dem Inhaber des Steuergeräte-Schlüsselpaares, beispielsweise dem Trust-Center, selbst signiert werden. Mit den Zusatzinformationen im Zertifikat ist es darüber hinaus möglich, dem Zertifikatsinhaber eine Fülle von Zugeständnissen oder Beschränkungen zuzuweisen. Beispielsweise kann ein Zeitraum zugestanden werden, über den hinweg der Zertifikatsinhaber Software erstellen und einspielen kann. Es können verschiedene Berechtigungslevel für die Generierung von Software und die Art der Software vergeben werden. Die Signierung der Software selbst findet jedoch immer durch den Zertifikatsinhaber selbst statt.

Unter Schlüssel versteht man allgemein Codier- und/oder Decodierparameter, die bei an sich bekannten kryptographischen Algorithmen verwendet werden. Dabei ist die Verwendung von symmetrischen und asymmetrischen Verfahren möglich. Bei symmetrischen Verfahren sind beide Schlüssel identisch, so daß eigentlich nur ein Schlüssel an verschiedenen Orten vorhanden ist. Bei asymmetrischen Verfahren werden verschiedene Schlüssel verwendet. Allgemein bekannt als asymmetrische Verfahren ist das Public-Key-Verfahren, bei dem ein öffentlicher und ein geheimer (privater) Schlüssel erzeugt werden. Der öffentlichen Schlüssel darf jedermann bekannt sein. Solche kryptographischen Algorithmen sind beispielsweise Rivest, Shamir und Adleman (RSA-Algorithmus), Data Encryption Algorithmus (DEA-Algorithmus) und dergleichen Algorithmen, bei denen es sich um asymmetrische Verfahren handelt. Diese Algorithmen können sowohl für das erste als auch für das zweite Schlüsselpaar verwendet werden.

In einer komplexeren Ausgestaltung des vorliegenden erfindungsgemäßen Verfahren werden zur Überprüfung einer in ein Steuergerät eingespielten Software nicht nur ein einziges sondern mehrere Zertifikate n vergeben. Damit bestehen noch weitere Gestaltungsmöglichkeiten. Zum einen ist es möglich, verschiedene Zertifikate auf verschiedene Personen zu verteilen, so daß nur in Gemeinschaft ein lauffähiges Einspielen von neuer Software in ein Steuergerät möglich ist. Zudem ist es möglich, verschiedene Zugriffsrechte über die verschiedene Anzahl von Zertifikaten zu vergeben.

Bei der Verwendung von mehreren Zertifikaten, kann die Signatur des ersten Zertifikates mit dem im Steuergerät hinterlegten Schlüssel geprüft werden. Die Signatur eines jeden weiteren Zertifikates kann wiederum von dem in einem vorherigen akzeptierten Zertifikat enthaltenen Schlüssel überprüft werden. Mit dem Schlüssel im letzten Zertifikat wiederum wird schließlich die Signatur der Software selbst überprüft. Nur wenn alle Überprüfungen erfolgreich verlaufen sind, wird die Software vom Steuergerät akzeptiert. Damit die Signatur eines Zertifikates mit dem in einem vorherigen Zertifikat enthaltenen Schlüssel überprüft werden kann, muß es mit dem zweiten dazugehörigen Schlüssel signiert worden sein.

Bei der Wahl, wo die geheimen und die öffentlichen Schlüssel jeweils abgelegt werden sollen, besteht eine große Variationsmöglichkeit. Beispielsweise sind in den Zertifikatsinformationen eines Zertifikates jeweils die öffentlichen Schlüssel abgelegt. Auch im Steuergerät selbst kann der öffentliche Schlüssel des Steuergeräte-Schlüsselpaares abgelegt sein. Entsprechend muß dann die zu überprüfende Signatur mit dem dazugehörigen geheimen Schlüssel gebildet worden sein.

Natürlich sind auch andere Ausführungsformen denkbar, bei denen in der Zertifikatsinformation und/oder im Steuergerät selbst der geheime Schlüssel hinterlegt sind. Auch Kombinationen mit symmetrischen Schlüsseln sind durchaus denkbar.

Vorzugsweise ist der im Steuergerät hinterlegte Schlüssel im Boot-Sektor abgelegt. Dieser ist normalerweise in besonderer Weise geschützt. Zur Erhöhung der Sicherheit, kann der Boot-Sektor auch so ausgebildet sein, daß er nach dem Beschreiben und dem Ablegen des darin enthaltenen Schlüssels "abgesperrt" wird, d.h. für zukünftige Zugriffe, insbesondere Schreibzugriffe gesperrt wird.

Verlaufen alle Prüfungen positiv (Zertifikatsprüfung und Softwareprüfung), so wird die Software vom Steuergerät oder einer eigens dafür vorgesehenen Einrichtung akzeptiert und kann zur Steuerung des Steuergerätes herangezogen werden.

Wie bereits oben beschrieben darf der öffentliche Schlüssel bei den sogenannten Public-Key-Verfahren öffentlich bekannt sein, wogegen der geheime Schlüssel nur einer autorisierten Stelle bekannt ist.

Gemäß einer besonderen Ausführungsform ist der geheime Schlüssel des Steuergeräte-Schlüsselpaares nur dem Trust-Center und der geheime Schlüssel eines Zertifikats-Schlüsselpaares nur dem Zertifikatsinhaber bekannt. Mit jedem geheimen Schlüssel läßt sich - analog zur handschriftlichen Unterschrift - eine digitale Signatur zu einem elektronischen Dokument (Zertifikat, Software) erzeugen. Nur der Besitzer des geheimen Schlüssels kann eine jeweils gültige Signatur erstellen. Die Echtheit des Dokuments (Zertifikat, Software) kann über die Verifikation der Unterschrift mittels des öffentlichen Schlüssels überprüft werden. Ein nicht autorisierter Dritter, der den geheimen Schlüssel nicht kennt, ist nicht in der Lage, eine gültige Signatur zu erstellen. Wird ein manipuliertes, abgelaufenes oder nicht berechtigendes Zertifikat in ein Steuergerät geladen oder eine manipulierte und nicht richtig unterzeichnete Software in das Steuergerät geladen, so wird dies mit dem jeweils dazugehörigen Schlüssel erkannt und das Steuergerät wird in einen nichtlauffähigen Zustand versetzt.

Bei der Verwendung eines symmetrischen Verfahren kann zur Erhöhung der Sicherheitsstufe ein zusätzlicher Auslöseschutz in Form einer speziellen Hardware herangezogen werden.

Um die Anforderungen eines ausschließlich fahrzeugindividuellen Einsatzes einer Software zu ermöglichen, enthält die für ein Steuergerät eines bestimmten Fahrzeugs vorgesehene Software fahrzeugindividualisierende Informationen, beispielsweise die Fahrgestellnummer oder andere fahrzeugindividuelle Daten. Diese Informationen sind der Software zugeordnet oder in diese integriert. Erst nach der Zuordnung oder Integration dieser Daten zur bzw. in die Software wird diese dann mit dem zweiten Schlüssel des Zertifikatsinhabers des letzten Zertifikates signiert. Ein Steuergerät akzeptiert - wie oben beschrieben - nur dann die Software, wenn zum einen das oder die Zertifikate und außerdem die Signatur der Software als einwandfrei erkannt worden sind. Da die Signatur von der in der Software enthaltenen fahrzeugindividuellen Information abhängt, kann diese nicht nachträglich verändert werden. Es kann nur eine Software lauffähig für ein Steuergerät eines Fahrzeugs eingespeist werden, wenn die fahrzeugindividuelle Information nicht verändert ist und mit derjenigen des Fahrzeugs tatsächlich übereinstimmt. Ein Kopieren einer solch individualisierten Software auf ein anderes Fahrzeug ist damit unmöglich.

Um eine weitere Sicherheitsstufe beim Einspielen von Software in den Speichern des Steuergerätes zu schaffen, sollte zudem vor dem Einspielen der Software ein Zugang zum Speicher des Steuergerätes nur mit entsprechender Berechtigung möglich sein. Dazu ist vor dem Überspielen der signierten Software ein "Aufschließen" des Steuergerätes in einem Anmeldeschritt vorgesehen. Bei der Verwendung unterschiedlicher priorisierter Level bei der Anmeldung könnten überdies auch verschieden ausgestaltete Zugriffsrechte vergeben werden. Bei einem Diagnosezugriff wäre beispielsweise zunächst eine Anmeldung notwendig, wodurch das Steuergerät über die eingegebene Zugangsinformation die Zugriffsrechte und die damit verbundene Berechtigungsstufe erkennt. Je nach Rechtevergabe können die Zugriffsberechtigungen von unkritisch bis sehr kritisch eingestuft werden. Die Rechtevergabe kann statisch gestaltet sein, so daß beispielsweise verschiedene Zugangscodes für bestimmte Berechtigungsstufen ausgegeben werden. Alternativ kann die Rechtevergabe auch dynamisch gestaltet werden, so daß beispielsweise Zutrittszertifikate vergeben werden, in deren Zertifikatsinformation die Berechtigungsstufe enthalten ist.

Gemäß einer Alternative werden die Überprüfungen der Signaturen im Steuergerät selbst durchgeführt. Gemäß einer weiteren Alternative kann zumindest eine Überprüfung auch in einer eigenen Zutritts- bzw. Zugriffssteuerung überprüft werden. Ein evtl. ausschließlich für die Zugriffssteuerung vorgesehenes Steuergerät sollte im Vergleich zu den übrigen Steuergeräten wegen der zentralen Sicherheitsfunktion hinsichtlich der Vergabe von Zugriffsrechten nicht zugänglich im Kraftfahrzeug angeordnet sein, da durch den physikalischen Ausbau eines Steuergerätes die oben beschriebenen Schutzmechanismen evtl. umgangen werden könnten.

Um ferner auch die Gefahr auszuschließen, daß ein Steuergerät ganz ausgebaut und gegen ein anderes ersetzt wird, kann zusätzlich ein Steuergeräteausbauschutz sinnvoll sein. Zu diesem Zweck wird beispielsweise in einem Fahrzeug, in dem die Steuergeräte integriert sind, sporadisch eine Steuergeräte-Authentitätsprüfung durchgeführt. Dazu wird ab und zu eine Anfrage an jedes Steuergerät gerichtet, die diese mit einer bestimmten erwarteten Information beantworten müssen. Stimmt die tatsächlich von einem zu überprüfenden Steuergerät abgegebene Information nicht mit der erwarteten Information überein oder antwortet das Steuergerät nicht, so werden geeignete Sicherungsmaßnahmen ergriffen. Beispielsweise wird das Steuergerät aus dem Kommunikationsverbund ausgeschlossen oder das Steuergerät wird registriert, markiert oder in eine Liste aufgenommen. Bei einer Diagnose des Fahrzeugs kann die Manipulation dann erkannt werden. Bei der oben beschriebenen Ausführungsform antworten die Steuergeräte auf Anfrage beispielsweise mittels eines geheimen, steuergerätespezifischen Authentifikationsschlüssel. Ein illegal ausgetauschtes Steuergerät verfügt über einen solchen Schlüssel nicht und wird damit auch nicht akzeptiert.

Die vorliegende Erfindung wird nachfolgend anhand von Ausführungsbeispielen und mit Bezug auf die beiliegenden Zeichnungen näher erläutert. Die Zeichnungen zeigen in
- Figur 1: eine schematische Darstellung einer Steuergerätestruktur in einem Fahrzeug,
- Figur 2: ein Ablaufdiagramm für ein Einlesen von Software in ein Steuergerät und
- Figur 3: eine schematische Darstellung für den Ablauf zur Vergabe einzelner Signaturen damit eine Software einwandfrei ein Steuergerät steuern kann,
- Figur 4: eine schematische Darstellung für die Vergabe eines Zertifikates durch ein Trust-Center,
- Figur 5: eine schematische Darstellung für die Erstellung einer digitalen Signatur für eine Software,
- Figur 6: eine schematische Darstellung des Ablaufes der Überprüfungen in einem Steuergerät zur Verifikation von eingespielter Software,
- Figuren 7a bis 7d: Darstellungen zur Verschlüsselung und Verifikation von Zertifikat und Software unter Verwendung eines Hash-Codes und
- Figur 8: eine Darstellung eines Algorithmus für eine Überprüfung von fahrzeugindividuellen Informationen.

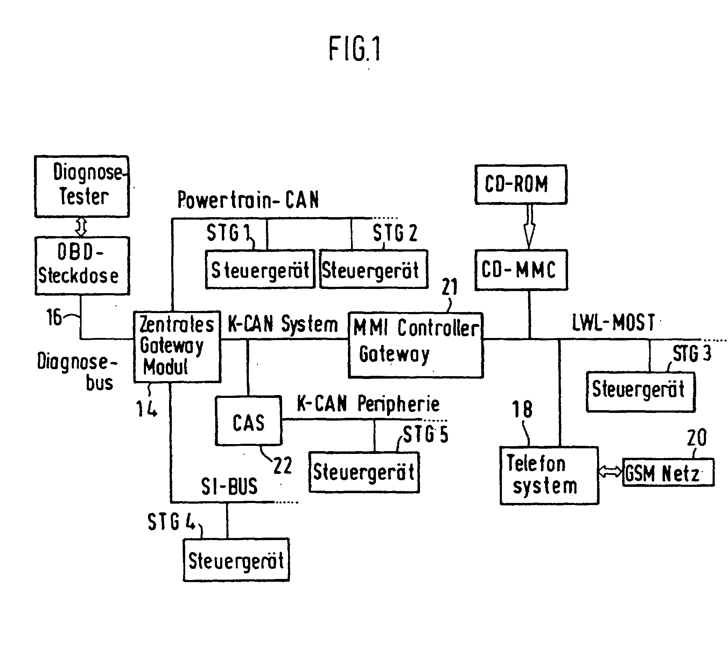

In Figur 1 ist blockdiagrammartig eine Steuergerätestruktur mit miteinander vernetzten Einheiten abgebildet. Das Boardnetz besteht hierbei aus mehreren Teilnetzen (LWL-Most, K-CAN System, Powertrain-CAN etc.), die zum Teil unterschiedliche Übertragungsgeschwindigkeiten besitzen und durch sogenannte Gateways (Zentrales Gateway Modul, Controller Gateway) miteinander verbunden sind. Mittels des Zentralen Gateways 14 ist ein Diagnosebus 16 mit allen übrigen Netzen mittelbar oder unmittelbar gekoppelt. Der Diagnosebus 16 stellt eine der wichtigsten Verbindungen zur Umwelt dar. Über einen Diagnosetester, der an einer OBD-Steckdose (OBD = on board diagnose) am Ende des Diagnosebuses 16 angeschlossen ist, und unter Zwischenschaltung des zentralen Gateways 14 können sämtliche Controller, Gateway und Steuergeräte im gesamten System angesprochen werden.

Alternativ besteht die Möglichkeit, über das GSM-Netz 20 und ein Telefonsystem 18 im Fahrzeug auf die Geräte im Fahrzeug zuzugreifen. Damit ist prizipiell ein Remotezugriff auf das Fahrzeug-Boardnetz möglich. Das Telefonsystem 18 stellt hierbei ebenfalls ein Gateway zwischen dem Mobilfunknetz (GSM-Netz) und den übrigen Fahrzeugbusteilnehmern dar.

Im Fahrzeugbus integriert ist ein Car-Access-System (CAS) 22, das den Zutritt zum Fahrzeug überwacht. Es beinhaltet als weitere Funktion eine elektronische Wegfahrsperre.

Ein Mulitmedia-Changer (MMC) stellt eine Schnittstelle zwischen einem CD-Player und dem Bordnetz dar. Beim Controller Gateway 21 werden Eingaben, die der Fahrer über die verschiedenen Instrumente macht, in Nachrichten umgesetzt und an die jeweils angesprochenen Steuergeräte weitergeleitet.

Daneben sind mehrere Steuergeräte (STG1 bis STG5) dargestellt. Die Aufgabe eines Steuergerätes besteht nicht nur in der Steuerung einer bestimmten Einheit im Fahrzeug, sondern auch in der Kommunikation zwischen den Geräten selbst. Die Kommunikation im Fahrzeug ist vorliegend Broadcast orientiert". Ein Erzeuger von Informationen, der den Buszugriff gewonnen hat, sendet seine Informationen grundsätzlich an alle Steuergeräte. Der Datenbus, der mit dem Controller verbunden ist, wird dazu permanent abgehört. Bei einer Kommunikation mit der Umwelt hingegen, beispielsweise über den Diagnosebus, wird jedes Steuergerät mit einer eindeutigen Adresse gezielt angesprochen.

Die Software, die die Funktionalität der Steuereinheit bestimmt, ist in Zukunft überwiegend in einem programmierbaren Flash-Speicher untergebracht. Bei einer Flashprogrammierung können nur ganze Blöcke gelöscht und neu beschrieben werden. Das Löschen einzelner Bites ist nicht möglich. Je nach Steuergeräten werden unterschiedliche Arten von Mikrocomputern eingesetzt. Je nach Anforderungen sind dies 8-Bit, 16-Bit oder 32-Bit-Prozessoren. Alle diese Steuergeräte oder Controller sind in unterschiedlichen Varianten verfügbar. Sie weisen beispielsweise einen Flash-Speicher auf dem Board oder direkt im Prozessor selbst integriert auf.

Nachfolgend soll näher auf die vorliegend verwendete Verschlüsselung eingegangen werden. Bei dem verwendeten Authentifizierungsverfahren wird eine asynchrone Verschlüsselung bevorzugt. Bei symmetrischen Schlüsseln muß jede Seite im Besitz des Geheimnisses sein. Sobald ein synchroner Schlüssel bekannt ist, kann eine wirksame Verschlüsselung nicht mehr sichergestellt werden. Da ein Schlüssel des Schlüsselpaares jedoch im Steuergerät eines Kraftfahrzeugs abgespeichert sein muß und somit dessen Geheimhaltung nicht sichergestellt werden kann, ist die Wahl eines symmetrischen Schlüsselpaares nicht ratsam.

Im Gegensatz zu der symmetrischen Verschlüsselung entwickelten W. Diffie und M. Hellman 1976 die sogenannte Public-Key-Kryptografie. Bei dieser Verschlüsselungsart wird ein Schlüsselpaar mit einem öffentlichen und einem geheimen Schlüssel erzeugt. Mit dem öffentlichen Schlüssel kann jeder entschlüsseln, es kann aber nicht verschlüsselt werden. Zum Verschlüsseln (signieren) hingegen wird der geheime Schlüssel benötigt.

Das Public-Key-Verfahren hat den Vorteil, daß ein Schlüssel des Schlüsselpaares öffentlich bekannt sein darf. Da die heute bekannten Public-Key-Verfahren aber sehr rechenintensiv sind, verwendet man häufig Hybrid-Verfahren, also eine Kombination aus symmetrischen und asymmetrischen Verfahren. Bei dem Hybrid-Verfahren wird ein symmetrischer Schlüssel mittels eines Public-Key-Verfahrens zwischen den Kommunikationspartnern ausgetauscht. Die eigentliche Kommunikation wird dann mit dem symmetrischen Schlüssel verschlüsselt.

Durch die Trennung von geheimen Schlüssel und öffentlichen Schlüssel lassen sich Authentifizierungsverfahren und digitale Signaturen wie oben beschrieben realisieren. Durch den Besitz des geheimen Schlüssels läßt sich eine Identität eindeutig nachweisen, und es kann eine Signatur, wie bei einer handschriftlichen Unterschrift erstellt werden. Bekannte Public-Key-Kryptosysteme sind das RSA-Verfahren. Andere Public-Key-Krypto-Verfahren beruhen auf Problemen in bestimmten mathematischen Gruppen, Logarithmen zu berechnen (Diskreter-Logarithmus-Problem).

Die vorliegende Erfindung wird im folgenden anhand eines bestimmten Ausführungsbeispiels beschrieben, bei dem ein Kunde eine bestimmte zusätzliche Funktion in seinem Kraftfahrzeug wünscht. Beispielsweise soll das Getriebe mit anderen Schaltkennlinien betrieben werden. Diese Funktion kann durch die Einspielung neuer Software in ein Steuergerät seines Fahrzeugs realisiert werden. Zur Realisierung wendet sich der Kunde an eine autorisierte Stelle, beispielsweise einen Händler, die eine solche Software erstellen und ablauffähig in sein Fahrzeug einspielen kann.

Die dafür notwendigen Abläufe werden im folgenden erläutert.

Um nicht alle bestellten Softwareumfänge von einer einzigen Stelle abzeichnen (signieren) lassen zu müssen, werden zunächst mehrere dezentrale Berechtigte - sogenannte Zertifikatsinhaber - (z.B. Händler) aufgebaut, bei denen eine gewünschte Software bestellt werden kann. Durch die Vergabe von Zertifikaten werden die Berechtigten in die Lage versetzt, die bestellte Software selbst zu erzeugen und auch zu unterzeichnen (signieren).

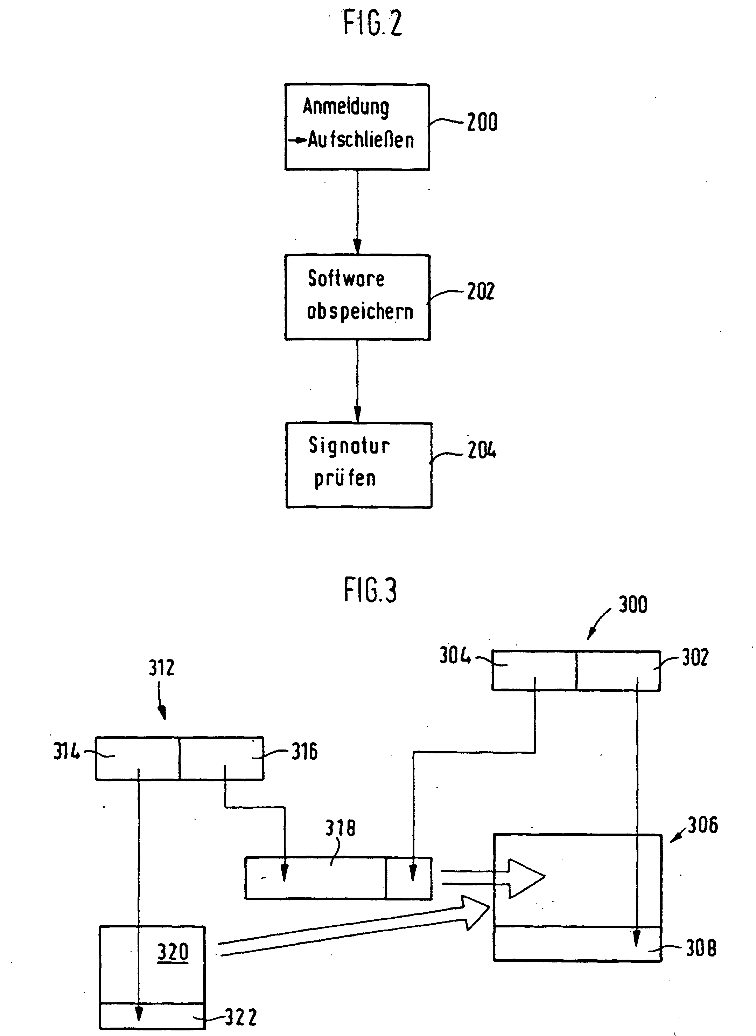

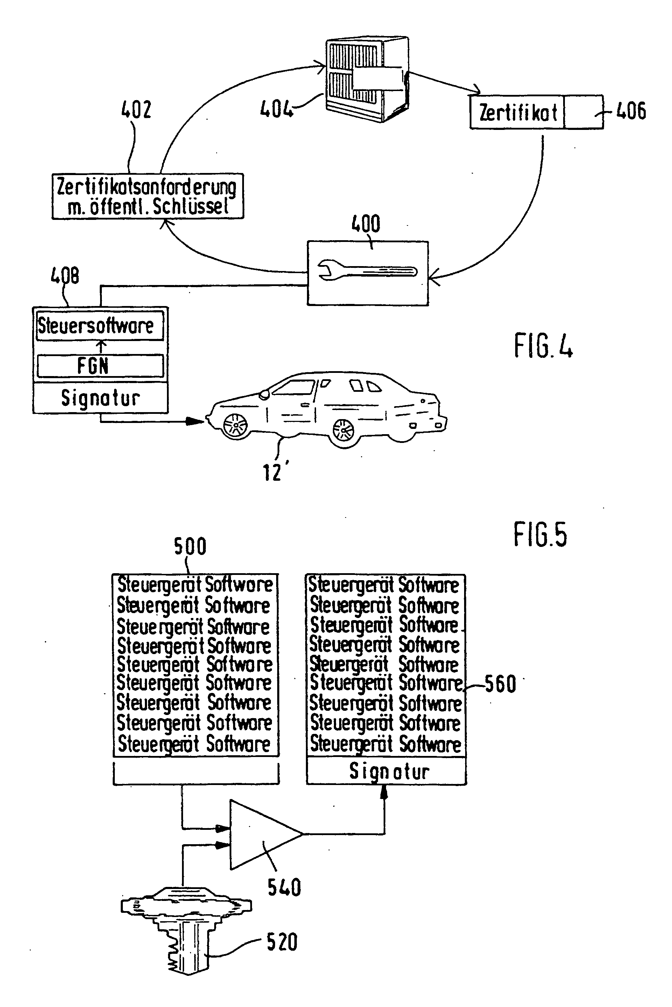

Der Ablauf wird zunächst mit Bezug zur Fig. 3 näher erläutert. In einem Trust-Center (404 in Fig. 4) wird ein erstes Schlüsselpaar 300 mit einem privaten Schlüssel 304 und einem öffentlichen Schlüssel 302 erzeugt.

Ein Schlüssel ist dabei ein elektronischer Code, mit dem eine Information ver- und/oder entschlüsselt werden kann. Man verwendet dabei bekannte kryptographische Algorithmen, wie die bereits oben beschriebenen RSA oder DEA Algorithmen, also sogenannte "public-key-Algorithmen" mit asynchronen Schlüsselpaaren.

Der öffentliche Schlüssel 302 des Trust-Centers wird bereits bei der Produktion eines Fahrzeugs in einem Steuergerät 306 im Bootsektor 308 abgelegt.

Mit dem privaten Schlüssel 304 jedoch wird nunmehr ein Zertifikat 318 unterzeichnet (signiert), welches bestimmte Zertifikatinformationen enthält.

Der Zertifikatinhaber erstellt ebenfalls ein Schlüsselpaar 312 (zweites Schlüsselpaar) mit einem weiteren privaten 314 und einem weiteren öffentlichen 316 Schlüssel. Der öffentliche Schlüssel 316 wird als eine Zertifikatsinformation im Zertifikat 318 abgelegt. Weitere Zertifikatsinformationen können beispielsweise der Zertifikatsaussteller, die Seriennummer, der Zertifikatsinhaber, bestimmte Zugriffsrechte oder der Gültigkeitszeitraum sein.

Mit dem privaten Schlüssel 314 des Zertifikatsinhabers, der nur diesem bekannt ist, wird eine Software 320 in nachfolgend noch zu beschreibender Weise signiert (Signatur 322). Der Zertifikatsinhaber spielt sodann das ständig bei ihm vorhandene Zertifikat 318 wie auch die erstellte und signierte Software 320 in das Steuergerät 306 ein.

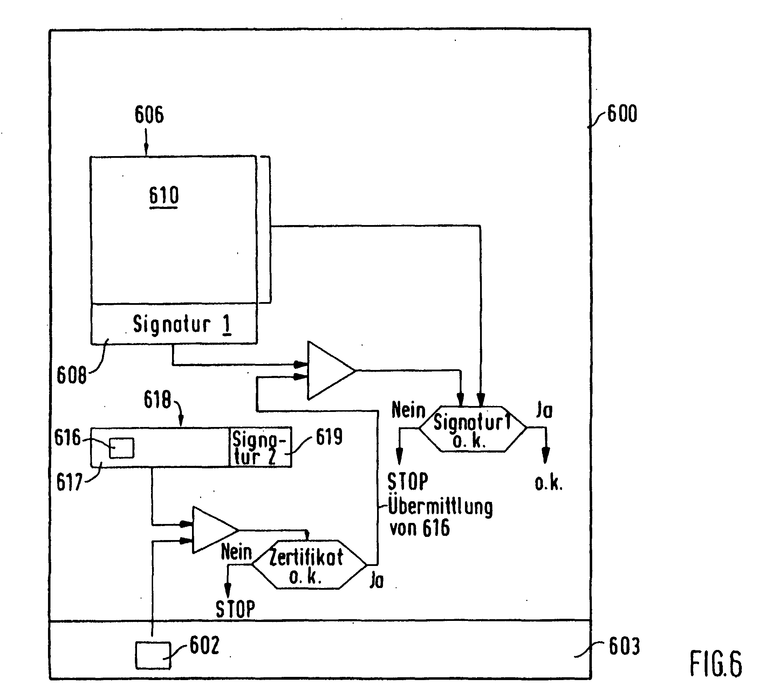

Die weitere Vorgehensweise wird nun anhand von Fig. 6 erläutert. Das Steuergerät 600 (Bezugszeichen 306 in Fig. 3) prüft bei seinem ersten Hochlauf nach der Einspielung zunächst, ob das Zertifikat 618 einwandfrei ist. Dazu wird mittels dem im Bootsektor 603 des Steuergerätes 600 hinterlegten öffentlichen Schlüssels 602 des Trust-Centers die Signatur 2 619 des Zertifikates 618 geprüft. Wird das Zertifikat 618 für o.k. befunden (Ja), ist die darin gespeicherte Zertifikatsinformation 617 zusammen mit dem öffentlichen Schlüssel 616 ebenfalls akzeptiert. Ist das Zertifikat bzw. dessen Unterschrift 619 nicht einwandfrei verifiziert (Nein), wird der Betrieb des Steuergerätes gestoppt (Stop).

Mit dem im Zertifikat 618 enthaltenen öffentlichen Schlüssel 616 wiederum wird die Signatur 1 608 der Software 606 überprüft. Wird diese Prüfung ebenfalls bestanden (Ja), kann das Steuergerät mit der neu eingespielten Software 610 betrieben werden (o.k.). Andernfalls (Nein) wird der Betrieb des Steuergerätes 600 gestoppt (Stop).

Insgesamt kann mit der beschriebenen Vorgehensweise eine Dezentralisierung von berechtigten Stellen, welche zur Unterzeichnung von Software befugt sind, erreicht werden. Dabei stehen verschiedenste Möglichkeiten offen, im Zertifikat weitere Berechtigungen und Beschränkungen zu verpacken. Ist im Zertifikat ein Gültigkeitszeitraum enthalten, so kann ein vormaliger Zertifikatsinhaber nach dem Ablauf des Gültigkeitszeitraum keine Software mehr signieren bzw. diese Software wird nicht mehr akzeptiert, weil das Zertifikat nicht mehr akzeptiert wird. Zudem kann über den Inhaber des Zertifikates auch nachvollzogen werden, wer in einem Steuergerät eine Software eingelesen und somit eine Modifikation vorgenommen hat.

In Fig. 2 ist eine weitere Sicherungsstufe dargestellt. Soll eine neue Software in ein Steuergerät eines Fahrzeugs eingespielt werden, so muß man sich zunächst anmelden (Schritt 200 in Fig. 2). Bei der Anmeldung erfolgt eine Identifizierung des Berechtigten. Erst bei erfolgreicher Identifizierung wird das Steuergerät aufgesperrt" wodurch prinzipiell ein Einlesen von neuer Software und des Zertifikates in das Steuergerät möglich ist (Schritt 202 in Fig. 2). Erst nach dem Einlesen erfogt dann die oben beschriebene Verifikation des Zertifikates und der Software.

Im folgenden wird die Erstellung des Zertifikates näher beleuchtet. Zunächst muß zwischen dem Trust-Center und einem Dritten Einigkeit bestehen, daß dieser Dritte als Zertifikatinhaber eine gewisse Berechtigungsstufe zugesprochen bekommt, geänderte Software in ein Steuergerät oder für ein Steuergerät eines Fahrzeugs einzulesen. Ist eine Einigung erzielt, generiert der zukünftige Zertifikatsinhaber (z.B. eine Werkstatt 400) sein eigenes Schlüsselpaar mit einem privaten und einem öffentlichen Schlüssel und sendet den öffentlichen Schlüssel mit einer Zertifikatsanforderung (Schritt 402 in Fig. 4) an das Trust-Center 404.

Das Trust-Center 404 erstellt das Zertifikat 406, signiert es mit dem geheimen Schlüssel (vgl. auch Bezugszeichen 304 in Fig. 3) und sendet es an den Zertifikatsinhaber 400 zurück, wo es verbleibt.

Der Zertifikatsinhaber 400 kann ab Erhalt des Zertifikates und soweit ihm dies das Zertifikat 406 erlaubt Software 408 (auch Bezugszeichen 320 in Fig. 3) mit seinem privatem Schlüssel signieren. Dies ist in Fig. 5 näher dargestellt. Dort wird eine Software 500 in einer Einheit 540 mit dem geheimen Schlüssel 520 signiert. Die signierte Software 560 ist dann zum Einspielen in das Steuergerät eines Fahrzeuges bereit. Mit Bezug auf Fig. 4 ist dies auch dargestellt. Dort wird die signierte Software 408 sowie das Zertifikat 406 von dem Zertifikatsinhaber in ein Fahrzeug 12 eingespielt.

Mit Bezug auf die Fig. 7a bis 7b wird das signieren der Software und des Zertifikates sowie die Überprüfung der jeweiligen Signatur näher erläutert.

Es ist ineffizient ein gesamtes elektronischen Dokument in seiner Gesamtheit zu signieren. Vielmehr wird dazu vorliegend eine sogenannten Hash-Funktion verwendet.

Genauer gesagt wird aus der Software 750 über eine an sich bekannte Hash-Funktion ein sogenannter Hash-Code 751 generiert, bei dem es sich um eine digitale Information mit vorgegebener Länge handelt. Dieser Hash-Code 751 wird dann mit dem geheimen Schlüssel des Zertifikatsinhabers signiert (Signatur 1 752). Die Signierung des Hash-Codes 751 ist wesentlich effizienter als die Signatur von langen Software-Dokumenten. Die bekannten Hash-Funktionen haben dabei folgende wesentliche Eigenschaften: Es ist im allgemeinen schwer, zu gegebenem Hash-Wert h einen Wert M eines Dokuments zu finden (Einwegfunktion). Zudem ist es schwer, eine Kollision, d.h. zwei Werte mit M und M', bei denen die Hash-Werte gleich sind, zu finden (Kollisionsresistenz).

Die angeforderte Software 753 kann - wie oben bereits erwähnt - vom Zertifikatsinhaber selbst erstellt und signiert werden.

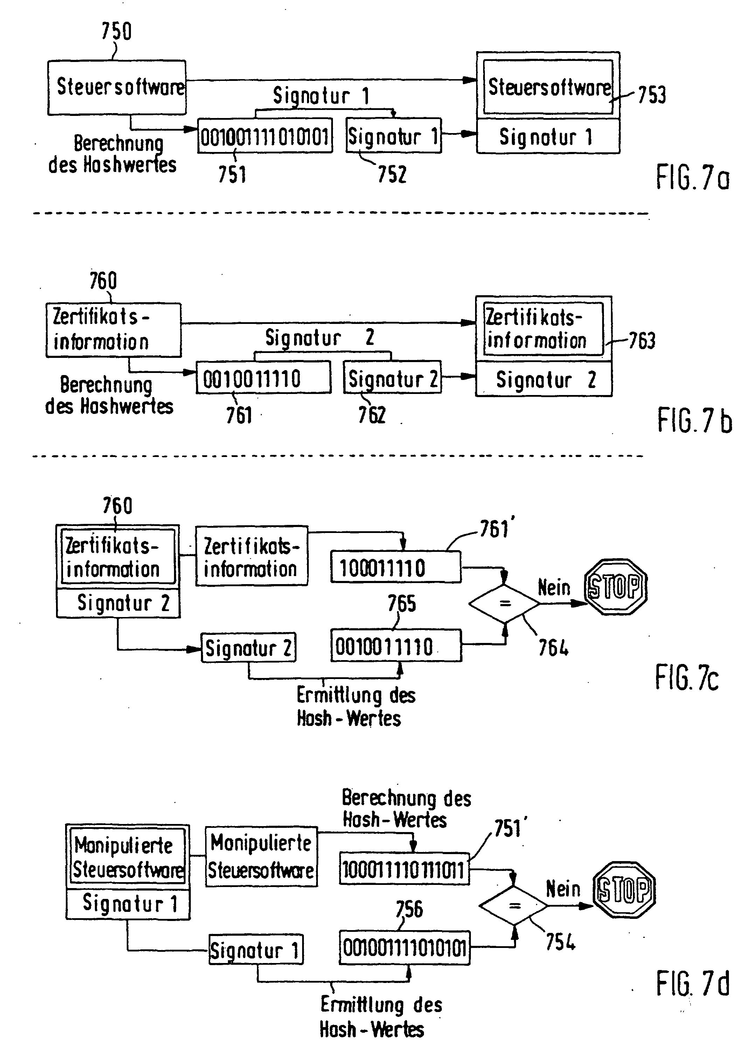

In analoger Weise zur Software wird ein Zertifikat erstellt (Fig. 7b). Aus der gesamten Zertifikatsinformation 760 inklusive dem öffentlichen Schlüssel des Zertifikatsinhabers wird über eine gleiche oder eine andere Hash-Funktion ein weiterer Hash-Code 761 generiert, bei dem es sich um eine digitale Information mit einer anderen vorgegebenen Länge handelt. Dieser andere Hash-Code 761 wird dann mit dem geheimen Schlüssel des Trust-Centers signiert (Signatur 2 762).

Nach dem Einspielen der neuen Software sowie des Zertifikates in ein Steuergerät wird dann beim nächsten Betrieb zunächst mittels des öffentlichen, im Steuergerät gespeicherten Schlüssels überprüft, ob die Signatur des Zertifikates einwandfrei ist (Fig. 7c). Dazu wird der öffentliche Schlüssel aus dem Steuergerät auf die Signatur 2 angewendet, was einen berechneten Hash-Code (Bezugszeichen 765) ergibt. Dieser berechnete Hash-Code 765 wird in einem Komparator 764 mit dem aus dem Zertifikat selbst nach der oben genannten Hash-Funktion gebildeten Hash-Code 761' verglichen. Vorliegend stimmen beiden Hash-Codes 765 und 761' nicht miteinander überein. Das Zertifikat ist vorliegend unberechtigterweise verändert worden. Dadurch wird der Betrieb des Steuergerätes unterbunden (Stop).

Wäre das Zertifikat als einwandfrei verifiziert worden, so wird im nächsten Schritt (Fig. 7d) überprüft, ob die Software ordnungsgemäß unterzeichnet ist. Dazu wird analog auf die Signatur 1 der Software der öffentliche Schlüssel aus dem Zertifikat angewendet, wodurch ein Hash-Code 756 bestimmt wird. Dieser Hash-Code 756 wird mit dem direkt aus der Software bestimmten Hash-Code 751' in einem Komparator 754 verglichen. Vorliegend ist keine Übereinstimmung gegeben, so daß wiederum der Betrieb des Steuergerätes unterbunden werden würde. Würden die beiden Hash-Codes 756 und 751' jedoch übereinstimmen, so würde das Steuergerät mit der neuen Software betrieben werden können. Um eine Überprüfung bei jedem Hochlaufen zu verhindern, kann nach der ersten Verifikation auch ein Prüfbit gesetzt werden, welches eine einwandfreie Verifikation anzeigt. Natürlich darf ein solches Prüfbit nicht von außen modifizierbar sein.

Neben der oben beschriebenen digitalen Signatur wird zur Authentifikation eines Kommunikationspartners A gegenüber einem Kommunikationspartners B häufig ein sogenanntes Challenge-Response-Verfahren verwendet. Dabei sendet B zunächst eine Zufallszahl RANDOM an A. A signiert diese Zufallszahl mittels seines geheimen Schlüssels und sendet diesen Wert als Antwort an B. B verifiziert die Antwort mittels seines öffentlichen Schlüssels und prüft die Authentifizierung von A.

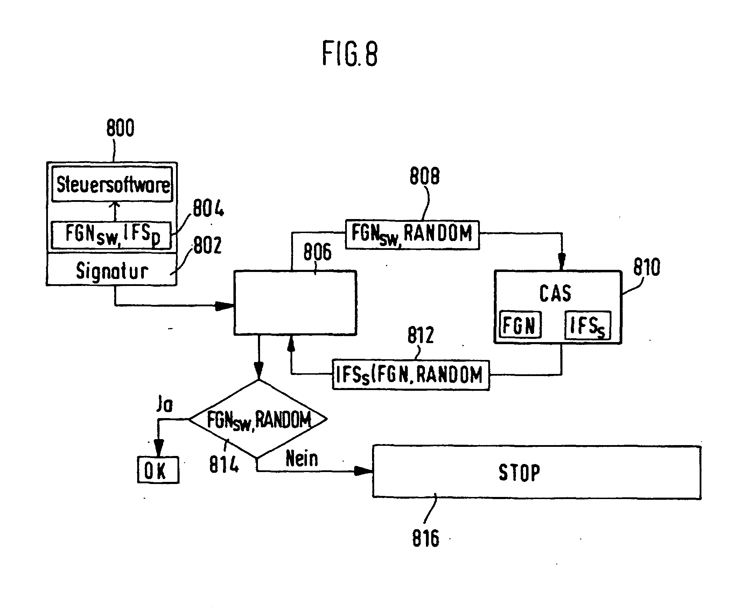

Nachfolgend wird anhand von Fig. 8 die Sicherstellung einer Individualisierung der Software für ein bestimmtes Fahrzeug beschrieben, wobei auf ein oben erwähntes Challenge-Response Verfahren Bezug genommen wird.

Das oben beschriebene Verfahren der Signatur einer Software wird insofern erweitert, als die Steuergeräte-Software noch für ein bestimmtes Fahrzeug individualisiert gekennzeichnet wird. Jede Software wird mit einem Identifikationsmerkmal eines bestimmten Fahrzeugs oder Fahrzeugtyps verbunden. Das Identifikationsmerkmal kann beispielsweise die Fahrgestellnummer sein.

Nachfolgend wird beschrieben warum die so gekennzeichnete Software dann nur noch in dieses Fahrzeug bzw. diesen Fahrzeugtyp in funktionsfähiger Weise eingespielt werden kann.

Zur Individualisierung der Software wird zunächst die Fahrgestellnummer FGNsw in die Software 800 eingetragen und anschließend wird die gesamte Software - zusammen mit einem privaten Schlüssel IFSp 804 - wie oben beschrieben nach Erstellung des Hash-Codes signiert (Bezugszeichen 802). Das Steuergerät 806 akzeptiert wie bereits beschrieben nur eine korrekt signierte Software. Da die Fahrgestellnummer FGNsw den Hash-Code und die Signatur beeinflußt ist es nicht möglich, die Fahrgestellnummer nachträglich zu verändern.

Ist die Signatur 802 prinzipiell akzeptiert, wird überprüft, ob das der Software 800 zugeorndete Fahrzeugidentifikationsmerkmal FGNsw mit dem tatsächlich im Fahrzeug vorliegenden Merkmal FGN übereinstimmt. Ist dies der Fall, wird die Software freigeschaltet. Damit kann die wie oben präparierte Software nur in einem bestimmten Zielfahrzeug verwendet werden. Für ein anderes Fahrzeug muß wiederum eine andere mit einer individuellen Signatur versehene Software beschafft werden.

Um eine solche Individualisierung einer Software durchführen zu können, sollte die Fahrgestellnummer bereits in der Fertigung in die entsprechenden Steuergeräte in nicht manipulierbarer Weise eingetragen werden. Die Fahrgestellnummer FGN muß auch nach einem Löschen eines Speichers in dem Steuergerät noch vorhanden sein. Dies kann dadurch realisiert werden, daß die Fahrgestellnummer beispielsweise in das oben bereits erwähnte Car-Access-System (CAS) 810 in einem nicht flüchtigen Speicher eingetragen ist.

Folgende Vorgehensweise gemäß Fig. 8 sichert dabei eine nicht manipulierbare Abfrage. Zusätzlich zur Fahrgestellnummer benötigt man ein weiteres fahrzeugindividuelles Schlüsselpaar bestehend aus einem geheimen Schlüssel IFSs und dem dem oben bereits erwähnten öffentlichen Schlüssel IFSp. Die Zuordnung der Fahrgestellnummer und der beiden Schlüssel erfolgt an zentraler Stelle. Der geheime Schlüssel IFSs ist in der Steuergeräteeinheit Car-Access-System (CAS) 810 gespeichert und zwar in nicht auslesbarer Form.

Die Fahrgestellnummer FGN befindet sich bereits im Zugriffsbereich des Car-Access-Systems.

In der neu einzuspielenden Software ist zusätzlich zur Fahrgestellnummer noch der öffentliche Schlüssel IFSp hinterlegt (804). Danach wird die gesamte Software 800 durch Signatur gesichert. Nach dem Laden der Software in das Steuergerät 806 wird zunächst die Korrektheit der Signatur geprüft. Danach verifiziert das Steuergerät 806 mittels einer vorher beschriebenen Challenge-Response-Abfrage, ob die Fahrgestellnummer in der Software mit der derjenigen des Fahrzeugs übereinstimmt. Dazu sendet das Steuergerät die Fahrgestellnummer aus der Software FGNsw und eine Zufallszahl RANDOM an das Car-Access-System 810 (Bezugszeichen 808). Dort wird die im Fahrzeug gespeicherte Fahrgestellnummer FGN mit der empfangenen Fahrgestellnummer FGNsw verglichen. Anschließend werden die beiden Werte mit dem geheimen Schlüssel IFSs signiert und wieder an das Steuergerät 806 zurück gesendet. Das Steuergerät 806 kann nun mit dem öffentlichen Schlüssel IFSp die signierte Sendung überprüfen. Danach wird verglichen (Schritt 814), ob die verschiedenen zueinander gehörenden Werte übereinstimmen. Ist dies der Fall (OK), so kann das Steuergerät 806 mit der fahrzeugindividuellen Software betrieben werden. Verläuft der Vergleich negativ, so wird der Betrieb des Steuergerätes gestoppt (Schritt 816).

Als Variante dieses Verfahren kann anstelle eines individuellen Schlüsselpaares IFSs und IFSp auch ein entsprechendes nicht für ein Fahrzeug individualisiertes Schlüsselpaar, das bereits im Fahrzeug gespeichert ist, verwendet werden. Dadurch entfällt die Verwaltung für diesen Schlüssel. Ebenso ist natürlich ein entsprechender Mechanismus mit einem symmetrischen kryptografischen Verfahren möglich. Dies hat zwar Vorteile bei der Abarbeitung, bringt aber die Gefahr des Auslesens des symmetrischen Schlüssels aus den Steuergeräten mit sich.

Natürlich ist bei allen oben genannten Verfahren absolut sicherzustellen, daß die geheimen Schlüssel des Trust-Centers auch geheim bleiben. Insgesamt bietet die vorgenannte Kryptografie eine gute Möglichkeit, nur ordnungsgemäße Software in Fahrzeuge bzw. in bestimmte Fahrzeuge einzuspielen und somit unbefugten Manipulationen vorzubeugen.

## Patentansprüche

1. Verfahren zur Sicherstellung der Datenintegrität einer Software für ein Steuergerät eines Kraftfahrzeugs, in dem in einem Speicher eine das Steuergerät in seiner Wirkungsweise beeinflussende Software speicherbar ist, wobei folgende Schritte vorgesehen sind,
Bereitstellen eines Steuergeräte-Schlüsselpaares mit einem ersten und einem zweiten Schlüssel,
Bereitstellen einer bestimmten Anzahl n von Zertifikats-Schlüsselpaaren mit jeweils einem ersten und einem zweiten Schlüssel,
Hinterlegen des ersten Schlüssels des Steuergeräte-Schlüsselpaares im oder für das Steuergerät in dem Kraftfahrzeug,
Erstellen von der bestimmten Anzahl n entsprechenden Zertifikaten, wobei jedes Zertifikat eine Zertifikatsinformation umfaßt, in der Zertifikatsinformation des letzten Zertifikates zumindest ein Schlüssel zur Überprüfung der Software und - falls mehrere Zertifikate verwendet werden - in den anderen Zertifikatsinformationen zumindest ein Schlüssel zur Überprüfung des nachfolgenden Zertifikates abgelegt sind,
Signieren der Zertifikatsinformation des ersten Zertifikates mit dem zweiten Schlüssel des Steuergeräte-Schlüsselpaares und - falls mehr als 1 Zertifikat vorhanden sind - Signieren der übrigen Zertifikate mit dem jeweils zweiten Schlüssel eines Zertifikat-Schlüsselpaares, von dem der jeweils erste Schlüssel in der Zertifikatsinformation des vorhergehenden Zertifikat abgelegt ist,
Signieren einer neu einzuspielenden Software mit dem zweiten Schlüssel eines Zertifikats-Schlüsselpaares, von dem der erste Schlüssel in der Zertifikatsinformation des letzten Zertifikats abgelegt ist,
Einspielen aller signierten Zertifikate in das Steuergerät,
Einspielen der signierten Software das Steuergerät,
Überprüfen der Signatur des ersten Zertifikates mit dem im oder für das Steuergerät hinterlegten ersten Schlüssel des Steuergeräte-Schlüsselpaares und falls mehr als 1 Zertifikat vorhanden sind - Überprüfen der Signatur jeden weiteren Zertifikates mittels dem in der Zertifikatsinformation des vorhergehenden Zertifikat enthaltenen ersten Schlüssels,
Akzeptieren der Zertifikatisinformation eines jeweiligen Zertifikates, wenn die jeweilige Überprüfung mit positivem Ergebnis verläuft, und
Überprüfen der Signatur der Software mit dem in der Zertifikatsinformation des letztem Zertifikat hinterlegten ersten Schlüssel und
Akzeptieren der eingespielten Software, wenn auch diese Überprüfung mit positivem Ergebnis verläuft.

2. Verfahren nach Anspruch 1,
**dadurch gekennzeichnet,**
**daß** in einem Zertifikat als die zumindest eine Zertifikatsinformation ein öffentlicher Schlüssel enthalten ist und daß die damit zu überprüfende Signatur mit einem zugehörigen geheimen Schlüssel durchgeführt ist.

3. Verfahren nach Anspruch 1 oder 2,
**dadurch gekennzeichnet,**
**daß** der erste Schlüssel des Steuergeräte-Schlüsselpaares, der in dem oder für das Steuergerät hinterlegt ist, ein öffentlicher Schlüssel ist und die Signatur des ersten Zertifikates mit dem zugehörigen geheimen Schlüssel durchgeführt ist.

4. Verfahren nach Anspruch 1 oder 2,
**dadurch gekennzeichnet,**
**daß** das Fahrzeug, insbesondere ein Steuergerät im Fahrzeug, ein asynchrones Schlüsselpaar mit einem öffentlichen und einem geheimen Schlüssel erzeugt, daß der geheime Schlüssel im Fahrzeug, insbesondere in einem Steuergerät, hinterlegt wird, und daß der öffentliche Schlüssel zur Signieren des ersten Zertifikates aus dem Fahrzeug auslesbar ist.

5. Verfahren nach einem der vorhergehenden Ansprüche,
**dadurch gekennzeichnet,**
**daß** der im Steuergerät hinterlegte Schlüssel im Boot-Sektor des Steuergerätes abgelegt wird.

6. Verfahren nach Anspruch 5,
**dadurch gekennzeichnet,**
**daß** der Boot-Sektor nach dem Beschreiben und der Eingabe des Schlüssel abgesperrt wird, und so gegen einen weiteren Zugriff, insbesondere einen Schreibzugriff, geschützt ist.

7. Verfahren nach einem der vorhergehenden Ansprüche,
**dadurch gekennzeichnet,**
**daß** die Software und/oder die Zertifikatsinformation jeweils auf eine Information mit bestimmter Länge abgebildet werden und diese Informationen dann signiert werden.

8. Verfahren nach Anspruch 7,
**dadurch gekennzeichnet,**
**daß** als Abbildungsfunktion eine Hash-Funktion gewählt wird.

9. Verfahren nach einem der vorhergehenden Ansprüche,
**dadurch gekennzeichnet,**
**daß** der Software zumindest eine fahrzeugindividuelle Information eines das Steuergerät enthaltenden Fahrzeugs hinzugefügt wird, daß mit der Software die zumindest eine fahrzeugindividuelle Information signiert wird, daß neben dem Überprüfen der Signaturen der Zertifikate und der Software auch die fahrzeugindividuelle Information überprüft wird und daß die Software nur dann im Steuergerät akzeptiert wird, wenn auch die fahrzeugindividuelle Information der Software mit derjenigen des Fahrzeugs übereinstimmt.

10. Verfahren nach Anspruch 9,
**dadurch gekennzeichnet,**
**daß** zur Überprüfung der fahrzeugindividuellen Information ein eigenes individuelles Schlüsselpaar erzeugt wird, wobei in einer Fahrzeugsicherheitseinheit oder dem Steuergerät die fahrzeugindividuelle Information und ein Schlüssel des fahrzeugindividuellen Schlüsselpaares vorhanden sind, in der Software neben der fahrzeugindividuellen Information noch der weitere Schlüssel des fahrzeugindividuellen Schlüsselpaares abgelegt ist und in einer separaten Routine überprüft wird, ob die beiden Schlüssel des fahrzeugindividuellen Schlüsselpaares zusammenstimmen, um bei einer Bejahung die eingespielte Software zu akzeptieren.

11. Verfahren nach einem der vorhergehenden Ansprüche,
**dadurch gekennzeichnet,**
**daß** die Software zumindest beim erstmaligem Hochlaufen des Steuergerätes geprüft und dann entsprechend gekennzeichnet wird.

12. Verfahren nach einem der vorhergehenden Ansprüche,
**dadurch gekennzeichnet,**
**daß** bei einem externen Zugriff auf das Steuergerät eine Zugangseinheit prüft, ob eine Berechtigung für den Zugriff vorliegt.

13. Verfahren nach Anspruch 12,
**dadurch gekennzeichnet,**
**daß** ein Code von einem Steuergerät angefordert wird und der Code auf Richtigkeit hin geprüft wird.

14. Verfahren nach Anspruch 13,
**dadurch gekennzeichnet,**
**daß** ein Steuergerät eine Zufallszahl ausgibt, die von dem Zugreifen zu signieren ist, und daß die Signatur im Steuergerät, insbesondere mittels eines Authetifizierungsschlüssels, überprüft wird.

15. Verfahren nach einem der Ansprüche 12 bis 14,
**dadurch gekennzeichnet,**
**daß** bei der Abfrage der Zugriffsberechtigung eine Berechtigungsstufe festgestellt wird und Zugriffsaktionen in Abhängigkeit von der Berechtigungsstufe akzeptiert oder nicht akzeptiert werden.

16. Verfahren nach einem der vorhergehenden Ansprüche,
**dadurch gekennzeichnet,**
**daß** eine Sicherheitseinrichtung in einem Fahrzeug zumindest sporadisch eine Authentitätsprüfung eines Steuergerätes durchführt und das Steuergerät bei negativem Ergebnis registriert.

17. Verfahren nach Anspruch 16,
**dadurch gekennzeichnet,**
**daß** im Steuergerät ein steuergerätindividueller geheimer Code hinterlegt ist.

18. Verfahren nach Anspruch 16 oder 17,
**dadurch gekennzeichnet,**
**daß** die Sicherheitseinrichtung ein steuergerätesprezifisches Merkmal abfrägt und dieses auf Authentität prüft.

19. Verfahren nach einem der Ansprüche 16 bis 18,
**dadurch gekennzeichnet,**
**daß** bei der Authentitätsprüfung ein in der Sicherheitseinrichtung und/oder ein in dem Steuergerät hinterlegter Schlüssel verwendet wird.

## Claims

1. A method for ensuring the data integrity of software for a control unit of a motor vehicle, in which software which influences the control unit with regard to its mode of action can be stored in a memory, wherein the following steps are provided:
- providing a pair of control unit keys with a first and second key,
- providing a specific number n of pairs of certificate keys, each with a first and a second key,
- filing the first key of the pair of control unit keys in or for the control unit in the motor vehicle,
- generating certificates corresponding to the specific number n, wherein each certificate comprises a piece of certificate information, at least one key for checking the software being filed in the piece of certificate information and - if a plurality of certificates are used - at least one key for checking the following certificate being filed in the other pieces of certificate information,
- signing the certificate information of the first certificate with the second key of the pair of control unit keys and - if more than one certificate is available - signing the remaining certificates with the respective second key of a pair of certificate keys, of which the respective first key is filed in the certificate information of the preceding certificate,
- signing software to be newly imported with the second key of a pair of certificate keys, of which the first key is filed in the certificate information of the last certificate,
- importing all signed certificates into the control unit,
- importing the signed software into the control unit,
- checking the signature of the first certificate with the first key of the pair of control unit keys filed in or for the control unit and if more than one certificate is available - checking the signature of each further certificate by means of the first key contained in the certificate information of the previous certificate,
- accepting the certificate information of a respective certificate, when the respective checking has a positive result, and
- checking the signature of the software with the first key filed in the certificate information of the last certificate and
- accepting the imported software if this check also has a positive result.

2. A method according to claim 1, **characterised in that** a public key is contained in a certificate as the at least one piece of certificate information and **in that** the signature to be checked thereby is carried out by means of a pertaining secret key.

3. A method according to claim 1 or 2, **characterised in that** the first key of the pair of control unit keys filed in or for the control unit is a public key and the signature of the first certificate is carried out with the pertaining secret key.

4. A method according to claim 1 or 2, **characterised in that** the vehicle, in particular a control unit in the vehicle, generates an asynchronous pair of keys with a public and a secret key, **in that** the secret key is filed in the vehicle, in particular in a control unit, and **in that** the public key can be read out of the vehicle to sign the first certificate.

5. A method according to any one of the preceding claims, **characterised in that** the key filed in the control unit is filed in the boot sector of the control unit.

6. A method according to claim 5, **characterised in that** the boot sector is blocked after the writing and input of the key, and is thus protected against further access, in particular write access.

7. A method according to any one of the preceding claims, **characterised in that** the software and/or the certificate information is imaged, in each case, on a piece of information with a specific length and this information is then signed.

8. A method according to claim 7, **characterised in that** a hash function is selected as the imaging function.

9. A method according to any one of the preceding claims, **characterised in that** at least one piece of a vehicle-specific information of a vehicle containing the control unit is added to the software **in that** the at least one piece of vehicle-specific information is signed with the software, **in that** as well as checking the signatures of the certificates and the software, the vehicle-specific information is also checked and **in that** the software is only accepted in the control unit when the vehicle-specific information of the software also corresponds with that of the vehicle.

10. A method according to claim 9, **characterised in that** for checking the vehicle specific information, one's own individual pair of keys is generated, wherein the vehicle-specific information and a key of the vehicle-specific pair of keys are present in a vehicle security unit or the control unit, the further key of the vehicle-specific pair of keys is also filed in the software as well as the vehicle-specific information and a check is made in a separate routine as to whether the two keys of the vehicle-specific pair of keys match, in order to accept the imported software if the answer is affirmative.

11. A method according to any one of the preceding claims, **characterised in that** the software is tested at least during the first start-up of the control unit and is then correspondingly characterised.

12. A method according to any one of the preceding claims, **characterised in that** in the event of an external access to the control unit, an access unit checks whether an authorisation exists for the access.

13. A method according to claim 12, **characterised in that** a code is requested by a control unit and the code is checked for validity.

14. A method according to claim 13, **characterised in that** the control unit outputs a random number which is to be signed by the accessing party, and **in that** the signature is checked in the control unit, more especially by means of an authentication key.

15. A method according to any one of claims 12 to 14, **characterised in that** when the access authorisation is queried, an authorisation stage is determined and access actions are accepted or not accepted as a function of the authorisation stage.

16. A method according to any one of the preceding claims, **characterised in that** a security device in a vehicle at least sporadically carries out an authentication check of a control unit and registers the control unit in the event of a negative result.

17. A method according to claim 16, **characterised in that** a control unit-specific secret code is filed in the control unit.

18. A method according to claim 16 or 17, **characterised in that** the security device queries a control unit-specific feature and checks it for authenticity.

19. A method according to any one of claims 16 to 18, **characterised in that** during the authenticity check, a key which is filed in the security device and/or a key filed in the control unit is used.

## Revendications

1. Procédé pour garantir l'intégrité des données d'un logiciel pour un appareil de commande d'un véhicule automobile, dans lequel un logiciel influençant l'appareil de commande dans son fonctionnement peut être stocké dans une mémoire, les étapes suivantes étant prévues et consistant à :
prévoir une paire de clés d'appareils de commande comprenant une première et une deuxième clé,
prévoir un nombre n défini de paires de clés de certificats comprenant à chaque fois une première et une deuxième clé,
déposer la première clé de la paire de clés des appareils de commande dans, ou pour, l'appareil de commande dans le véhicule automobile,
produire des certificats correspondants à partir du nombre n défini, chaque certificat comprenant une information de certificat et, dans l'information du dernier certificat, est distribuée au moins une clé de contrôle du logiciel et -dans le cas où plusieurs certificats sont utilisés - au moins une clé de contrôle du certificat suivant est distribuée dans les autres informations de certificat,
signer l'information de certificat du premier certificat avec la deuxième clé de la paire de clés des appareils de commande et - en présence de plus d'un certificat - signer les autres certificats avec à chaque fois la deuxième clé d'une paire de clés de certificat, où à chaque fois la première clé est distribuée dans l'information de certificat du certificat précédent,
signer un nouveau logiciel à mettre au point avec la deuxième clé d'une paire de clés de certificats, dans laquelle la première clé est distribuée dans l'information du dernier certificat,
mettre au point tous les certificats signés dans l'appareil de commande,
mettre au point le logiciel signé dans l'appareil de commande,
contrôler la signature du premier certificat avec la première clé de la paire de clés des appareils de commande déposée dans ou pour l'appareil de commande et - en présence de plus d'un certificat - contrôler la signature de chaque autre certificat au moyen de la première clé contenue dans l'information du certificat précédent,
accepter l'information de certificat d'un certificat respectif, lorsque le contrôle respectif donne un résultat positif, et
contrôler la signature du logiciel avec la première clé déposée dans l'information du dernier certificat et
accepter le logiciel mis au point, même si ce contrôle donne un résultat positif.

2. Procédé selon la revendication 1,
**caractérisé en ce que**
pour l'au moins une information de certificat, une clé publique est contenue dans un certificat et la signature ainsi à contrôler est effectuée avec une clé cachée correspondante.

3. Procédé selon la revendication 1 ou 2,
**caractérisé en ce que**
la première clé de la paire de clés des appareils de commande qui est déposée dans ou pour l'appareil de commande est une clé publique et la signature du premier certificat est effectuée avec la clé cachée correspondante.

4. Procédé selon la revendication 1 ou 2,
**caractérisé en ce que**
le véhicule, notamment un appareil de commande dans le véhicule, génère une paire de clés asynchrones comprenant une clé publique et une clé cachée, la clé cachée étant déposée dans le véhicule, notamment dans un appareil de commande, et la clé publique pouvant être sélectionnée à partir du véhicule pour signer le premier certificat.

5. Procédé selon l'une des revendications précédentes,
**caractérisé en ce que**
la clé déposée dans l'appareil de commande est distribuée dans le secteur d'amorçage de l'appareil de commande.

6. Procédé selon la revendication 5,
**caractérisé en ce que**
le secteur d'amorçage est bloqué après l'écriture et l'entrée de la clé, et est ainsi protégé contre tout autre accès, notamment tout accès d'écriture.

7. Procédé selon l'une des revendications précédentes,
**caractérisé en ce que**
le logiciel et/ou l'information de certificat sont représentés à chaque fois par une information d'une longueur définie et ces informations sont alors signées.

8. Procédé selon la revendication 7,
**caractérisé en ce que**
pour la fonction de représentation, il est choisi une fonction de hachage.

9. Procédé selon l'une des revendications précédentes,
**caractérisé en ce que**
il est ajouté au logiciel au moins une information individuelle au véhicule d'un véhicule contenant l'appareil de commande, l'au moins une information individuelle au véhicule étant signée avec le logiciel et, outre le contrôle des signatures des certificats et du logiciel, l'information individuelle du véhicule est également contrôlée et le logiciel est alors seulement accepté dans l'appareil de commande même si l'information individuelle au véhicule relative au logiciel correspond à celle du véhicule.

10. Procédé selon la revendication 9,
**caractérisé en ce que**,
pour contrôler l'information individuelle du véhicule, une paire de clés individuelles particulières est générée, l'information individuelle au véhicule et une clé de la paire de clés individuelles au véhicule étant prévues dans une unité de sécurité de véhicule ou dans l'appareil de commande, et dans le logiciel, outre l'information individuelle du véhicule, est distribuée l'autre clé de la paire de clés individuelles au véhicule et, dans une étape distincte, on contrôle si les deux clés de la paire de clés individuelles au véhicule coïncident entre elles pour accepter le logiciel mis au point par une réponse affirmative.

11. Procédé selon l'une des revendications précédentes,
**caractérisé en ce que**
le logiciel est vérifié au moins lors de la première mise en marche de l'appareil de commande et est alors caractérisé en correspondance.

12. Procédé selon l'une des revendications précédentes,
**caractérisé en ce que**
lors d'un accès externe sur l'appareil de commande, une unité d'accès vérifie la présence d'une autorisation d'accès.

13. Procédé selon la revendication 12,
**caractérisé en ce qu'**
un code est demandé par un appareil de commande et l'exactitude du code est vérifiée.

14. Procédé selon la revendication 13,
**caractérisé en ce qu'**
un appareil de commande génère un nombre aléatoire qui doit être signé lors de l'accès et la signature est contrôlée dans l'appareil de commande, notamment au moyen d'une clé d'authentification.

15. Procédé selon l'une des revendications 12 à 14,
**caractérisé en ce que**
lors de l'interrogation de l'autorisation d'accès, une étape d'autorisation est constatée et des actions d'accès sont acceptées ou ne sont pas acceptées en fonction de l'étape d'autorisation.

16. Procédé selon l'une des revendications précédentes,
**caractérisé en ce qu'**
un dispositif de sécurité dans un véhicule effectue au moins de manière sporadique une vérification de l'authenticité d'un appareil de commande et enregistre l'appareil de commande en cas de résultat négatif.

17. Procédé selon la revendication 16,
**caractérisé en ce que**
dans l'appareil de commande est déposé un code caché individuel à l'appareil de commande.

18. Procédé selon la revendication 16 ou 17,
**caractérisé en ce que**
le dispositif de sécurité interroge une caractéristique spécifique à l'appareil de commande et vérifie l'authenticité de celle-ci.

19. Procédé selon l'une des revendications 16 à 18,
**caractérisé en ce que**
lors de la vérification de l'authenticité, on utilise une clé déposée dans le dispositif de sécurité et/ou une clé déposée dans l'appareil de commande.
